(19) Europäisches Patentamt
European Patent Office
Office européen des brevets

(11) **EP 2 130 294 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **08717876.0**

(22) Anmeldetag: **17.03.2008**

(51) Int Cl.:
*H02P 29/024* (2016.01)      *H02P 9/00* (2006.01)
*H02P 9/10* (2006.01)

(86) Internationale Anmeldenummer:
**PCT/EP2008/053139**

(87) Internationale Veröffentlichungsnummer:
**WO 2008/116769 (02.10.2008 Gazette 2008/40)**

(54) **VERFAHREN UND VORRICHTUNG ZUM BETRIEB EINER DOPPELTGESPEISTEN ASYNCHRONMASCHINE BEI TRANSIENTEN NETZSPANNUNGSÄNDERUNGEN**

METHOD AND DEVICE FOR OPERATING AN ASYNCHRONOUS MOTOR WITH DOUBLE FEEDS UNDER TRANSIENT GRID VOLTAGE CHANGES

PROCÉDÉ ET DISPOSITIF DESTINÉS À FAIRE FONCTIONNER UN MOTEUR ASYNCHRONE À ALIMENTATION DOUBLE LORS DE VARIATIONS TRANSITOIRES DE LA TENSION DE RÉSEAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.03.2007 DE 102007014728**

(43) Veröffentlichungstag der Anmeldung:
**09.12.2009 Patentblatt 2009/50**

(73) Patentinhaber: **Woodward Kempen GmbH 47906 Kempen (DE)**

(72) Erfinder: **KRETSCHMANN, Jörg 47906 Kempen (DE)**

(74) Vertreter: **Bonsmann, Joachim Bernhard et al Bonsmann . Bonsmann . Frank Patentanwälte Kaldenkirchener Strasse 35 a 41063 Mönchengladbach (DE)**

(56) Entgegenhaltungen:
**US-A1- 2005 116 476    US-A1- 2006 238 929 US-A1- 2007 052 244**

- **SEMAN ET AL: "Ride-Through Analysis of Doubly Fed Induction Wind-Power Generator Under Unsymmetrical Network Disturbance" IEEE TRANSACTIONS ON POWER SYSTEMS, IEEE SERVICE CENTER, PISCATAWAY, NJ, US, Bd. 21, Nr. 4, 1. November 2006 (2006-11-01), Seiten 1782-1789, XP011149801 ISSN: 0885-8950**
- **DATABASE COMPENDEX [Online] ENGINEERING INFORMATION, INC., NEW YORK, NY, US; XIANG D ET AL: "Control of a doubly fed induction generator in a wind turbine during grid fault ride-through" XP002502698 Database accession no. E20071310509415 & IEEE TRANSACTIONS ON ENERGY CONVERSION SEPTEMBER 2006 INSTITUTE OF ELECTRICAL AND ELECTRONICS ENGINEERS INC. US, Bd. 21, Nr. 3, September 2006 (2006-09), Seiten 652-662,**
- **JIA-BING HU ET AL: "Dynamic modelling and robust current control of wind-turbine driven DFIG during external AC voltage dip", JOURNAL OF ZHEJIANG UNIVERSITY SCIENCE A; AN INTERNATIONAL APPLIED PHYSICS & ENGINEERING JOURNAL, SPRINGER, BERLIN, DE, vol. 7, no. 10, 1 October 2006 (2006-10-01), pages 1757-1764, XP019440029, ISSN: 1862-1775, DOI: 10.1631/JZUS.2006.A1757**

**Beschreibung**

Die vorliegende Erfindung betrifft ein Verfahren und eine Vorrichtung zum Betrieb einer doppeltgespeisten Asynchronmaschine an einem Netz bei transienten Netzspannungsänderungen.

Die doppeltgespeiste Asynchronmaschine wird vorzugsweise in drehzahlvariablen Systemen, beispielsweise in Windkraftanlagen hoher Leistung, als Wellengenerator oder in Verbindung mit Schwungmassenspeichern und unterbrechungsfreien Stromversorgungen eingesetzt. Im Allgemeinen ist der Stator der Asynchronmaschine mit dem Netz und der Rotor über Schleifringe mit einem Umrichter verbunden. Mit einem solchen Umrichter kann ein Sollwert einer elektrischen Größe in den Rotor eingeprägt werden. Der Begriff Umrichter ist weit zu fassen. In der Regel gibt es in modernen Anlagen einen maschinenseitigen Umrichter und einen netzseitigen Umrichter, die über einen Zwischenkreis miteinander verbunden sind. Neben Spannungs- und Stromzwischenkreisen sind auch Direktumrichter, die ohne Zwischenkreis auskommen, möglich. Auch die Speisung des maschinenseitigen Umrichters durch eine Gleichspannungs- oder Gleichstromquelle ist möglich. Die elektrische Größe, die in den Rotor eingeprägt wird, kann zum Beispiel eine Spannung oder ein Strom sein. In der Regel werden heute Vier-Quadranten-Umrichter mit IGBTs verwendet. Aber auch andere Halbleiterschalter wie GTOs und Thyristoren sind möglich.

Der Vorteil der doppeltgespeisten Asynchronmaschine gegenüber vergleichbaren Systemen besteht in der reduzierten Bauleistung des Umrichters gegenüber der Gesamtleistung, die in ein Netz gespeist werden kann. Dadurch hat ein System mit einer doppeltgespeisten Asynchronmaschine einen vergleichsweise guten Wirkungsgrad.

Die Amplitude und Frequenz der Rotorspannung sind proportional dem Schlupf der Maschine. Der Schlupf definiert sich aus der Abweichung der mechanischen Drehzahl von der synchronen Drehzahl bezogen auf die synchrone Drehzahl. Typische Drehzahlbereiche der doppeltgespeisten Asynchronmaschine liegen zwischen 70% und 130% der synchronen Drehzahl. In diesem Arbeitsbereich der Drehzahl ist die erforderliche maximale Rotorspannung erheblich niedriger als bei stillstehender Maschine. Die Amplitude der Rotorspannung ist im Stillstand mehr als dreimal so groß als bei 30% Schlupf. Der absolute Wert der Amplitude hängt vom Übersetzungsverhältnis der Maschine ab. Die Frequenz der induzierten Rotorspannung ist im Stillstand gleich der Netzfrequenz. Im typischen Drehzahlbereich beträgt die Frequenz maximal 30% der Netzfrequenz. Der Umrichter ist normalerweise so ausgelegt, dass er maximal die benötigte Spannung im definierten Drehzahlbereich liefern kann.

Im Zuge der zunehmenden Anzahl von Windkraftanlagen und der damit verbundenen immer höher werdenden Anforderungen der Netzbetreiber ist das Verhalten der doppeltgespeisten Asynchronmaschine bei transienten Änderungen der Netzspannung zunehmend von Interesse. Transiente Änderungen sind dabei zeitlich begrenzte Abweichungen der Netzspannung vom stationären Wert beziehungsweise vom Nennwert. Das können sowohl Spannungseinbrüche als auch Spannungsanstiege sein. Allgemein spricht man von Spannungssprüngen oder transienten Spannungssprüngen. Spannungseinbrüche können dabei z.B. durch Kurzschlüsse im Netz auftreten. Dabei können Spannungseinbrüche im Extremfall bis auf 0% auftreten. Spannungsanstiege können bei nicht ausgeglichener Blindleistungsbilanz im Netz auftreten, zum Beispiel beim Abschalten großer induktiver Verbraucher.

Bei einer doppeltgespeisten Asynchronmaschine ist der Stator der Maschine direkt mit dem Netz verbunden, so dass sich bei einer transienten Netzspannungsänderung die Statorspannung entsprechend verhält. Der Flusszeiger der Maschine dreht sich im stationären Zustand mit der Netzfrequenz. Bei einer transienten Spannungsänderung entsteht ein Anteil des magnetischen Flusses, der relativ zum Stator feststeht und sich erst nach mehreren Netzperioden wieder abbaut. Dieser stillstehende Flussanteil, man spricht auch von einem Gleichanteil des Flusses, ist proportional zur Änderung des Netzspannungszeigers. Der Gleichanteil des Flusses induziert in die Rotorwicklung eine erheblich höhere Spannung als im stationären Netzbetrieb mit definiertem Drehzahlbereich. Der Umrichter ist im Allgemeinen aber nur für einen solchen stationären Netzbetrieb ausgelegt und damit nicht in der Lage, eine entsprechende Gegenspannung zu liefern. Das hat zur Folge, dass das Antwortverhalten des doppeltgespeisten Systems bei Spannungssprüngen kurzschlussartige Ströme im Stator und im Rotor sowie ein entsprechendes Luftspaltdrehmoment zeigt. Die einfachste technische Lösung für ein optimales Antwortverhalten der doppeltgespeisten Asynchronmaschine wäre, den Umrichter für eine Rotorspannung auszulegen, die für die Kompensation eines maximalen Netzspannungssprunges notwendig ist. Dies käme allerdings nahezu einer Umrichterbauleistung gleich, die der Gesamtleistung des Systems entspricht. Dies macht jedoch den wesentlichen Vorteil des doppeltgespeisten Systems, nämlich die vergleichsweise geringe Bauleistung des Umrichters, zunichte.

Zum Schutz des Umrichters einer doppeltgespeisten Asynchronmaschine wird in der Regel eine sogenannte Crowbar verwendet. Das ist eine Schutzschaltung mit Thyristoren, durch die der Rotor kurzgeschlossen werden kann. Als Auslösekriterium für die Crowbar kann das Überschreiten eines zulässigen Rotorstroms, eines zulässigen Zwischenkreisstromes oder einer zulässigen Zwischenkreisspannung dienen. Wie bereits erläutert, kann eine transiente Netzspannungsänderung zu unzulässig hohen Rotorströmen führen. Dementsprechend kann die bei transienten Netzspannungsänderungen in den Rotor induzierte Spannung auch zu einer Zufuhr von Energie in den Zwischenkreis und damit zu einer Erhöhung der Zwischenkreisspannung oder des Zwischenkreisstromes führen. Die Crowbar schützt zwar den Umrichter vor Zerstörung des Zwischenkreises, ihr Einsatz hat jedoch gravierende Nachteile in Bezug auf das Gesamtverhalten der doppeltgespeisten Asynchronmaschine:

Ein vom Umrichter gesteuerter Normalbetrieb der doppeltgespeisten Asynchronmaschine, beispielsweise mit einer Regelung der Wirk- und Blindleistungsabgabe auf einen festgelegten Wert oder mit einer Regelung anhand anderer Parameter, ist während der Aktivierung der Crowbar nicht mehr möglich. Bei kurzgeschlossenem Rotor wirkt die Maschine wie eine Asynchronmaschine mit Käfigrotorwicklung, das heißt die Maschine nimmt induktive Blindleistung in Abhängigkeit der Drehzahl aus dem Netz auf und nimmt Wirkleistung aus dem Netz auf oder gibt sie ab. Wenn die Crowbar im Zuge einer transienten Netzspannungsänderung aktiviert wird, vergehen nach dem Ende der Spannungsänderung im Allgemeinen mindestens 100 ms, bevor ein definierter Betrieb, z.B. mit Wirk- und Blindleistungsregelung, wieder möglich ist. Damit können die Forderungen der Netzbetreiber, auch bei transienten Spannungsänderungen Wirk- und Blindleistung aktiv zu regeln, nicht erfüllt werden. Es kann auch gefordert sein, dass anstelle von Wirk- und Blindleistung andere entsprechende Größen wie Netzspannung, Leistungsfaktor, Moment oder Scheinleistung geregelt werden sollen.

Wie bereits erwähnt, führen die kurzschlussartigen Ströme bei transienten Netzspannungsänderungen zu einem entsprechenden Luftspaltdrehmoment. Ein solches Drehmoment belastet den Antriebsstrang und das Getriebe. Durch einen Einsatz der Crowbar wird das auf den Antriebstrang und das Getriebe wirkende Drehmoment noch verstärkt. Dabei ist nicht nur der Betrag des Drehmomentes kritisch, sondern auch die auftretenden Wechselanteile des Drehmomentes, welche im besonderen Maße bei unsymmetrischen Netzfehlern auftreten. Solche Drehmomentbelastungen führen zwar im Normalfall nicht zu unmittelbaren Schäden, bei entsprechender Häufigkeit kann die Lebensdauer des Getriebes und anderer Komponenten des Antriebsstranges jedoch erheblich gemindert werden.

In WO 2004/030199 wird eine Vorrichtung zur kontinuierlichen Speisung von Energie in das Netz mit einer doppeltgespeisten Asynchronmaschine bei plötzlichen Netzspannungsänderungen beschrieben. Die Vorrichtung beinhaltet einen elektronischen Schalter im Statorkreis, durch den der Stator bei Spannungsänderungen kurzzeitig vom Netz getrennt wird. Diese Vorrichtung hat den Nachteil, dass die Maschine wieder zum Netz synchronisiert werden muss.

In der Veröffentlichung von A. Causebrook, D.J. Atkinson und A.G. Jack "Fault Ride-Through: Shifting the Balance of Power from Blade Pitch to Electrical Resistance", Athen, EWEC 27.02.-02.03.2006, wird eine Anordnung mit einem elektronischen Schalter und einem parallelen Widerstand offenbart. Dabei wird im Falle eines Netzfehlers der Widerstand in den Netzpfad geschaltet und ermöglicht so die Ableitung von elektrischer Energie aus der Maschine. Eine solche Anordnung begrenzt recht gut die auftretenden Strom- und Drehmomentspitzen unmittelbar nach Fehlereintritt. Um ein Abklingen der zeitlichen Wechselanteile von Strom und Drehmoment zu gewährleisten, sind jedoch recht lange Einschaltzeiten des Widerstandes erforderlich. Die erforderlichen Einschaltzeiten für realistisch ausgelegte Widerstände liegen deutlich über 20ms. Das ist die Zeit, nach der Energieversorgungsunternehmen einen geregelten Betrieb mit Abgabe definierter Wirk- und Blindleistung fordern. Bei längeren Einschaltzeiten des Widerstandes kann es außerdem vorkommen, dass nicht nur wie gewünscht Wirkleistung aus der Maschine aufgenommen wird, sondern auch aus dem Netz. Letzteres ist in einigen Netzanschlussrichtlinien sogar untersagt.

Neben schaltungstechnischen Lösungen finden sich im Stand der Technik auch Betrachtungen zu den Regelverfahren einer doppeltgespeisten Asynchronmaschine in Bezug auf das Verhalten bei transienten Netzspannungsänderungen, so auch in dem Dokument von Jorun I. Marvik, Torstein Bjørgum, Bjarne I. Naess, Tore M. Undeland und Terje Gjengedal "Control of a Wind Turbine with a Doubly Fed Induction Generator after Transient Failures", NORPIE 14.-16.06.2004. Hier wird das Verhalten eines Blindleistungsreglers und eines Flussreglers miteinander verglichen.

WO 2006/030183 zeigt eine Statorspannungs- und Statorleistungsregelung mit einer unterlagerten Rotorflussregelung für die Regelung der doppeltgespeisten Asynchronmaschine bei stationärer Netzspannung und zusätzlichen Hilfsreglern zur Optimierung des Verhaltens bei transienten Netzspannungsänderungen.

Dem vorgenannten Stand der Technik ist zu entnehmen, dass eine Flussregelung einer elektrischen Maschine bzw. einer doppeltgespeisten Asynchronmaschine sowohl im stationären als auch im transienten Zustand bekannt ist. Dabei wird der Sollwert für den zu regelnden Fluss aus einem überlagerten Regler generiert oder auf einen konstanten Wert oder - im Falle einer transienten Netzspannungsänderung - auf seinen quasistationären Wert gesetzt.

Gemäß SEMAN ET AL: "Ride-Through Analysis of Doubly Fed Induction Wind- Power Generator Under Unsymmetrical Network Disturbance", IEEE TRANSACTIONS ON POWER SYSTEMS, IEEE SERVICE CENTER, PISCATAWAY, NJ, US, Bd. 21, Nr. 4,1. November 2006, Seiten 1782-1789 erfolgt bei einer doppeltgespeisten Asynchronmaschine bei Erkennen einer transienten Netzspannungsänderung zunächst ein Blockieren der IGBTs zugunsten einer Ableitung der Ströme durch die Crowbar. Erst später erfolgt eine Aufprägung einer elektrischen Größe in den Rotor. Zumindest bis dahin können Drehmomentstöße nicht wirksam unterdrückt werden.

Aus der US 2005/0116476 A1 ist eine doppeltgespeiste Asynchronmaschine mit einer steuerbaren Längsimpedanz im Netzpfad zur Störungskompensation bekannt.

Aus der US 2006/0238929 A1 ist eine doppeltgespeiste Asynchronmaschine mit einer steuerbaren Längsimpedanz im Statorpfad zur Störungskompensation bekannt.

Aus der US 2007/052244 A1 ist ein mehrstufiges Verfahren zur Reaktion auf transiente Netzspannungsänderungen bei einer doppeltgespeisten Asynchronmaschine bekannt.

Aus XIANG D et al: "Control of a doubly fed induction generator in a wind turbine during grid fault ride-through", IEEE TRANSACTIONS ON ENERGY CONVERSION, Bd. 21, Nr. 3, September 2006, Seiten 652-662 (Datenbankzusammenfassung) ist ein Verfahren zur Reaktion auf transiente Netzspannungsänderungen bei einer doppeltgespeisten Asynchronmaschine bekannt.

Aus JIA-BING HU ET AL: "Dynamic modelling and robust current control of wind-turbine driven DFIG during external AC voltage dip", JOURNAL OF ZHEJIANG UNIVERSITY SCIENCE A; AN INTERNATIONAL APPLIED PHYSICS & ENGINEERING JOURNAL, SPRINGER, BERLIN, DE, Bd. 7, Nr. 10, 1. Oktober 2006 (2006-10-01), Seiten 1757-1764, ist ein gattungsgemäßes Verfahren zur Reaktion auf transiente Netzspannungsänderungen bei einer doppeltgespeisten Asynchronmaschine bekannt.

Eine Aufgabe der vorliegenden Erfindung ist es, bei einem Betrieb einer doppeltgespeisten Asynchronmaschine an einem Netz, in welchem verschiedene Arten von transienten Netzspannungsänderungen auftreten, die mechanische Belastung des Antriebsstranges bei solchen transienten Netzspannungsänderungen zu reduzieren.

Zur Lösung dieser Aufgabe wird ein Verfahren zum Betrieb einer doppeltgespeisten Asynchronmaschine bei transienten Netzspannungsänderungen, bei der der Stator mit dem Netz und der Rotor mit einem Umrichter verbunden ist, und bei der der Umrichter dazu ausgebildet ist, einen Sollwert einer elektrischen Größe in den Rotor einzuprägen, vorgeschlagen, bei dem unmittelbar nach Erkennen einer transienten Netzspannungsänderung ein wenigstens aus dem Rotorfluss und dem Statorfluss bestimmter Sollwert der elektrischen Größe in den Rotor derart eingeprägt wird, dass eine aktive Reduzierung des während der transienten Netzspannungsänderung auftretenden Drehmomentes erreicht wird. Gemäß der Erfindung wird bereits rasch nach einer Netzspannungsänderung wieder ein definierter Betrieb in dem jeweiligen Normalregelungsmodus, beispielsweise mit Wirk- und Blindleistungsregelung, ermöglicht.

Gemäß einer bevorzugten Ausführungsform der Erfindung wird nach Erkennen einer transienten Netzspannungsänderung der wenigstens aus dem Rotorfluss und dem Statorfluss bestimmte Sollwert der elektrischen Größe in den Rotor derart eingeprägt, dass ferner eine aktive Reduzierung des während der transienten Netzspannungsänderung auftretenden Rotorstromes erreicht wird. Somit kann ein gleichermaßen optimales Verhalten hinsichtlich der Höhe von Rotorstrom und Drehmoment gewährleistet werden.

Insbesondere wird gemäß einer Ausführungsform der Erfindung durch eine geeignete Wichtung z.B. von Statorflusszeiger und Rotorflusszeiger (z.B. im Verhältnis 40 % zu 60 %) eine für alle Netzfehler-Arten gleichermaßen optimale Reduktion von Rotorstrom und Drehmoment erzielt. Dies geschieht unter der Randbedingung, dass die zur Verfügung stehende Stellgröße (z.B. Rotorspannung) begrenzt ist.

Das erfindungsgemäße Verfahren ist unabhängig von der Regelung der doppeltgespeisten Asynchronmaschine im stationären Betrieb. Im stationären Betrieb besteht im Allgemeinen die Anforderung einer Regelung der aufzunehmenden oder abzugebenden Wirk- und Blindleistung. Alternativ kann auch die Regelung anderer entsprechender Größen wie Netzspannung, Leistungsfaktor, Moment oder Scheinleistung gefordert sein. Hierzu können bekannte Verfahren verwendet werden. Erst nach Erkennen einer transienten Netzspannungsänderung wird auf das erfindungsgemäße Verfahren umgeschaltet.

Die kurzschlussartigen Ströme und das entsprechende Drehmoment, welche bzw. welches bei transienten Netzspannungsänderungen im Allgemeinen auftreten, können somit in kürzestmöglicher Zeit abgebaut werden, und die Regelung kann wieder auf eine Wirk- und Blindleistungsregelung oder eine andere stationäre Regelungsstrategie umgestellt werden.

Die erfindungsgemäße Regelung wird nur für kurze Zeit nach Erkennen einer transienten Netzspannungsänderung aktiviert und ansonsten ein Standardregelverfahren, z.B. zur Regelung der Wirk- und Blindleistung, verwendet. In einer vorteilhaften Ausgestaltung der Erfindung wird der Sollwert der elektrischen Größe, die in den Rotor eingeprägt werden soll, um den Rotorfluss im Falle eines Netzfehlers optimal zu steuern, bereits im stationären Betrieb kontinuierlich berechnet. Dadurch kann eine größere Zeitverzögerung, die entsteht, wenn die elektrische Größe erst nach Erkennen einer transienten Netzspannungsänderung bestimmt wird, vermieden werden.

Es gibt noch weitere Maschinengrößen, deren Produkt dem Drehmoment proportional ist und die folglich anstelle von Rotorfluss und Statorfluss verwendet werden können: Es ist zum Beispiel möglich und von der Erfindung umfasst, jeweils einen der Raumzeiger für Rotorstrom, Rotorfluss, Statorstrom oder Statorfluss mit einer geeigneten Wichtung zur Bestimmung der Rotor-Sollgröße zu verwenden, ebenso wie der Statorspannungszeiger in Verbindung mit dem Rotorstrom- oder Rotorflusszeiger.

Erfindungsgemäß ist die elektrische Größe, die in den Rotor eingeprägt wird, die Rotorspannung. Die gängigste hierfür geeignete Umrichtertopologie für eine doppeltgespeiste Asynchronmaschine ist der Vier-Quadranten-Umrichter mit IGBTs und Gleichspannungszwischenkreis. Bei anderen Umrichtertopologien kann es sinnvoll sein, den Rotorstrom als elektrische Größe, die in den Rotor eingeprägt wird, zu wählen.

Gemäß der vorliegenden Erfindung wird der Sollwert des Rotorspannungszeigers, der in den Rotor eingeprägt wird, aus mindestens einer Komponente des Differenzzeigers aus dem Zeiger des Rotorflusses und aus dem Zeiger des Statorflusses ermittelt.

Gemäß einer weiteren bevorzugten Ausführungsform der vorliegenden Erfindung ist der Sollwert des Rotorspannungszeigers dem Differenzzeiger aus Rotorflusszeiger und Statorflusszeiger proportional.

Gemäß einer weiteren bevorzugten Ausführungsform der vorliegenden Erfindung wird wegen der natürlichen Begrenzung des Betrages der Rotorspannung eine Wichtung zu Gunsten der Komponente des Differenzzeigers aus Rotorflusszeiger und Statorflusszeiger, die senkrecht zum Statorflusszeiger steht, vorgenommen.

Gemäß einer weiteren bevorzugten Ausführungsform der vorliegenden Erfindung wird aus dem gleichen Grunde eine Wichtung zu Gunsten der Komponente des Differenzzeigers aus Rotorflusszeiger und Statorflusszeiger, die parallel zum Statorflusszeiger steht, vorgenommen.

Ein Umrichter mit IGBTs oder anderen Halbleiterschaltern kann nur diskrete Zustände schalten. Eine dreiphasige Brückenschaltung kann acht diskrete Zustände annehmen. Bei dem Verfahren der Drehzeigermodulation werden während einer Abtastperiode für jeweils eine bestimmte Zeit verschiedene diskrete Zustände angenommen und zwar derart, dass der Mittelwert des Drehzeigers dem Sollwert möglichst gut entspricht. Damit ist man in der Lage, kontinuierliche Spannungswerte zu generieren. Im Falle einer transienten Netzspannungsänderung muss der Umrichter eine möglichst hohe Gegenspannung zu der vom Statorfluss in die Rotorwicklung induzierten Spannung liefern. Deshalb wird gemäß einer weiteren bevorzugten Ausführungsform der vorliegenden Erfindung während einer Abtastperiode nur ein diskreter Schaltzustand des Umrichters geschaltet, wobei derjenige Schaltzustand gewählt wird, dessen Phasenlage der Phasenlage des Sollwertes der Rotorspannung am nächsten liegt. Dadurch wird der mit dem Umrichter maximal mögliche Betrag der Spannung in den Rotor eingeprägt. Der dabei entstehende Fehler in der Phasenlage der Spannung kann in diesem Zusammenhang vernachlässigt werden, da sich die Winkelabweichungen vom Sollvektor über die Zeit statistisch ausgleichen.

Der Rotorfluss und der Statorfluss sind keine direkt messbaren Größen und werden deshalb mittels eines Beobachters berechnet. Dabei können gemäß einem geeigneten Modell die zeitlichen Augenblickswerte des Stator- und Rotorfluss-Zeigers ebenso berechnet werden wie die quasistationären Zeiger. Letztere bezeichnen den Statorfluss- und Rotorfluss-Zeiger, wenn der momentane Augenblickswert der Statorspannung solange anstehen würde, dass sämtliche Ausgleichvorgänge abgeklungen sind. Gemäß einer weiteren Ausführungsform der vorliegenden Erfindung werden zur Bestimmung des Sollwertes der Rotorspannung der transiente Rotorfluss und der quasistationäre Statorfluss verwendet. Die Verwendung des transienten Statorflusses erfordert einen höheren Rechenaufwand, liefert jedoch auch genauere Ergebnisse. Deshalb werden gemäß einer anderen Ausführungsform zur Bestimmung des Sollwertes der Rotorspannung der transiente Rotorfluss und der transiente Statorfluss verwendet.

Der Beobachter zur Bestimmung des Rotor- und Statorflusses berechnet die nicht direkt messbaren Größen aus direkt messbaren Größen. Gemäß einer bevorzugten Ausführungsform werden der Rotorfluss und der Statorfluss aus jeweils mindestens einer der gemessenen Größen Statorspannung, Statorstrom und Rotorstrom berechnet. Je nach Art des verwendeten Modells ist eine gemessene Größe ausreichend, wie etwa im Falle des quasistationären Statorflusses. Bei genaueren Modellen können auch zwei oder alle genannten Messgrößen erforderlich sein.

Wenn vorstehend als verfügbare Messgrößen die Statorspannung, der Statorstrom und der Rotorstrom erwähnt werden, jedoch nicht die Rotorspannung, so bezieht sich dies auf die Implementierung der Erfindung bei einer doppeltgespeisten Asynchronmaschine, bei der umrichterseitig die Rotorspannung gesteuert wird, weshalb die Rotorspannung in diesem Falle eine Stellgröße darstellt und daher in der Regel als Messgröße nicht zur Verfügung steht. Bei alternativen Steuerungen - z.B. mit einer Rotorstromsteuerung - kann jedoch auch die Rotorspannung als Messgröße berücksichtigt werden.

Zur Lösung der Aufgabe wird ferner eine Vorrichtung vorgeschlagen, die einen Umrichter und mindestens eine Steuereinheit aufweist, und bei der die Steuereinheit Mittel aufweist, durch die ein Sollwert der elektrischen Größe aus dem Rotorfluss und dem Statorfluss so bestimmt wird, dass eine aktive Reduzierung des während der transienten Netzspannungsänderung auftretenden Drehmomentes erreicht wird, wobei nach Erkennen einer transienten Netzspannungsänderung der Sollwert der elektrischen Größe in den Rotor eingeprägt wird

Bei der erfindungsgemäßen Vorrichtung kann der Umrichter mit nur einer Steuereinheit betrieben werden. Es ist aber auch möglich, separate Steuereinheiten für einen maschinenseitigen Umrichter und einen netzseitigen Umrichter zu verwenden. Jede Steuereinheit kann einen oder mehrere Mikrocontroller bzw. Mikroprozessoren aufweisen. Die Steuereinheit weist ferner geeignete Ausgabeschnittstellen zur Übertragung des Ansteuersignals an den Umrichter auf.

Erfindungsgemäß ist die elektrische Größe, die in den Rotor eingeprägt wird, die Rotorspannung.

Erfindungsgemäß bestimmen die Mittel den Sollwert des Rotorspannungszeigers aus mindestens einer Komponente des Differenzzeigers aus dem Zeiger des Rotorflusses und dem Zeiger des Statorflusses.

Gemäß einer weiteren Ausführungsform der erfindungsgemäßen Vorrichtung ist der Sollwert des Rotorspannungszeigers dem Differenzzeiger aus Rotorflusszeiger und Statorflusszeiger proportional.

Gemäß einer weiteren Ausführungsform der erfindungsgemäßen Vorrichtung überschreitet der Sollwert der Rotorspannung einen festgelegten Wert nicht, und die Mittel nehmen eine Wichtung zu Gunsten derjenigen Komponente des Differenzzeigers aus Rotorflusszeiger und Statorflusszeiger, die senkrecht zum Statorflusszeiger steht, vor.

Gemäß einer weiteren Ausführungsform der erfindungsgemäßen Vorrichtung überschreitet der Sollwert der Rotorspannung einen festgelegten Wert nicht, und die Mittel nehmen eine Wichtung zu Gunsten derjenigen Komponente des Differenzzeigers aus Rotorflusszeiger und Statorflusszeiger, die parallel zum Statorflusszeiger steht, vor.

Gemäß einer weiteren Ausführungsform der erfindungsgemäßen Vorrichtung wird durch Mittel der Steuereinheit während einer Abtastperiode nur ein diskreter Schaltzustand des Umrichters geschaltet, und die Mittel wählen den Schaltzustand, dessen Phasenlage der Phasenlage des Sollwertes der Rotorspannung am nächsten liegt.

Gemäß einer weiteren Ausführungsform der erfindungsgemäßen Vorrichtung verwenden die Mittel zur Bestimmung des Sollwertes der Rotorspannung eine geeignete Wichtung des transienten Rotorflusses und des quasistationären Statorflusses.

Gemäß einer weiteren Ausführungsform der erfindungsgemäßen Vorrichtung verwenden die Mittel zur Bestimmung des Sollwertes der Rotorspannung eine geeignete Wichtung des transienten Rotorflusses und des quasistationären Statorflusses.

Gemäß einer weiteren Ausführungsform der erfindungsgemäßen Vorrichtung verwenden die Mittel zur Bestimmung des Sollwertes der Rotorspannung eine geeignete Wichtung des transienten Rotorflusses und des transienten Statorflusses.

Gemäß einer weiteren Ausführungsform der erfindungsgemäßen Vorrichtung werden der Rotorfluss und der Statorfluss aus jeweils mindestens einer der gemessenen Größen Statorspannung, Statorstrom und Rotorstrom (sowie ggf. Rotorspannung) berechnet. Zu diesem Zweck können geeignete Messwandler verwendet werden. Zur Übernahme der Daten weist die Steuereinheit entsprechende Eingabeschnittstellen auf.

Gemäß einer weiteren Ausführungsform der erfindungsgemäßen Vorrichtung ist im Netzpfad der doppeltgespeisten Asynchronmaschine eine steuerbare Längsimpedanz angeordnet. Eine solche steuerbare Längsimpedanz besteht aus einer Impedanz und einem parallelen Schalter. Als Impedanz kommt ein ohmscher Widerstand in Frage, der Energie aus der Maschine aufnehmen kann. Ein induktiver Anteil kann zusätzlich den Stromanstieg begrenzen. Als Schalter kommt vorzugsweise ein elektronischer Schalter in Betracht, da zur Lösung der Aufgabe entsprechend schnelle Reaktionszeiten erforderlich sind, die mit einem mechanischen Schalter, zum Beispiel einem Schütz, kaum zu realisieren sind. Vorzugsweise wird dazu ein aktiver Halbleiterschalter verwendet, wie zum Beispiel ein GTO. Es können aber auch Thyristoren mit entsprechender Löschschaltung verwendet werden. Im Normalbetrieb ist der Schalter leitend, und die Impedanz ist kurzgeschlossen. Nach Erkennen einer transienten Netzspannungsänderung wird der Schalter geöffnet und die Impedanz wird in den Netzpfad geschaltet. Alternativ ist auch ein getakteter Betrieb des elektronischen Schalters möglich, so dass die Impedanzwerte einstellbar sind. Die Impedanz sorgt insbesondere unmittelbar nach Auftreten des transienten Netzspannungsfehlers für eine zusätzliche Absenkung des Drehmomentes.

Gemäß einer weiteren Ausführungsform der erfindungsgemäßen Vorrichtung ist im Statorpfad der doppeltgespeisten Asynchronmaschine eine steuerbare Längsimpedanz angeordnet. Zunächst gelten die gleichen Vorteile wie für eine Anordnung der Längsimpedanz im Netzpfad. Zusätzlich hat eine Anordnung im Statorpfad den Vorteil, dass der elektronische Schalter für eine geringere Leistung ausgelegt werden muss. Zum anderen bleibt der netzseitige Umrichter direkt mit dem Netz verbunden, so dass auch während eines transienten Netzspannungssprunges Blindleistung über den netzseitigen Umrichter in das Netz geliefert werden kann. Diese Vorteile gelten unabhängig davon, ob gleichzeitig ein geeigneter Sollwert in den Rotor eingeprägt wird.

Gemäß einer weiteren Ausführungsform der erfindungsgemäßen Vorrichtung weist der Umrichter einen Spannungszwischenkreis auf, mit dem eine Schaltung mit einem Widerstand zur Absenkung der Zwischenkreisspannung mit dem Spannungszwischenkreis verbunden ist. Eine solche Schaltung wird auch als Zwischenkreis-Chopper bezeichnet. Ein solcher Zwischenkreis-Chopper kann alternativ oder zusätzlich zu einer Längsimpedanz im Netz- oder Statorpfad verwendet werden. Durch das Einprägen eines Sollwertes einer elektrischen Größe in den Rotor, die durch eine geeignete Wichtung z.B. aus Statorflusszeiger und Rotorflusszeiger (z.B. im Verhältnis 40 % zu 60 %) bestimmt wird, wird dem Generator aktiv Wirkleistung entzogen. Diese Wirkleistung kann von dem Chopper-Widerstand aufgenommen werden. Der Zwischenkreis-Chopper bietet zusätzlich Schutz vor einem unzulässig hohen Anstieg der Zwischenkreisspannung.

Weitere Ausgestaltungen der Erfindung sind der Beschreibung und den Unteransprüchen zu entnehmen. Die Erfindung wird nachstehend anhand von Ausführungsbeispielen unter Bezugnahme auf die beigefügten Abbildungen näher erläutert. Es zeigen:

Figur 1  den schematischen Aufbau einer doppeltgespeisten Asynchronmaschine mit einem Vier-Quadranten-Umrichter und Spannungszwischenkreis;

Figur 2  eine schematische Darstellung des erfindungsgemäßen Verfahrens zur Bestimmung einer Spannung, die in den Rotor eingeprägt wird;

Figur 3  eine schematische Darstellung eines Ausführungsbeispiels der Wichtung zu Gunsten einer Komponente des Differenzzeigers aus Rotorfluss und Statorfluss;

Figur 4  eine schematische Darstellung der möglichen Schaltzustände einer dreiphasigen Brückenschaltung und der Funktionsweise der Drehzeigermodulation;

Figur 5      eine schematische Darstellung der möglichen Schaltzustände einer dreiphasigen Brückenschaltung und der maximalen Zeigerlänge;

Figur 6      eine schematische Darstellung des erfindungsgemäßen Verfahrens zur Ermittlung eines diskreten Schaltzustandes;

Figur 7      eine schematische Darstellung des erfindungsgemäßen Verfahrens, das zwischen der Benutzung von diskreten Schaltzuständen und kontinuierlichen Winkellagen umschalten kann;

Figur 8      eine schematische Darstellung einer doppeltgespeisten Asynchronmaschine mit steuerbarer Längsimpedanz im Netzpfad;

Figur 9      eine schematische Darstellung einer doppeltgespeisten Asynchronmaschine mit steuerbarer Längsimpedanz im Statorpfad; und

Figur 10    den schematischen Aufbau einer doppeltgespeisten Asynchronmaschine mit einem Vier-Quadranten-Umrichter, Spannungszwischenkreis und Zwischenkreis-Chopper.

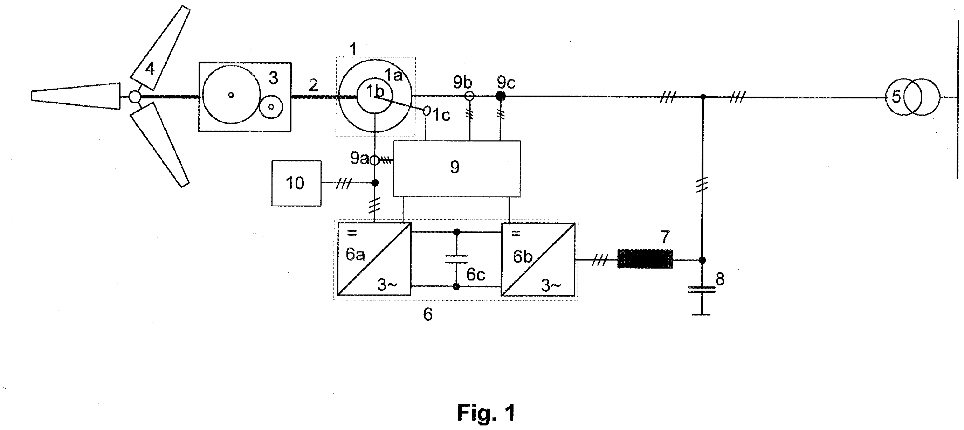

Fig. 1 zeigt schematisch ein System mit einer doppeltgespeisten Asynchronmaschine 1. Die doppeltgespeiste Asynchronmaschine 1 weist einen Stator 1a und einen Rotor 1b auf. An der Maschine ist außerdem ein Lagegeber 1c angebracht. Der Rotor der Asynchronmaschine ist mechanisch über eine Welle 2 und ein Getriebe 3 mit einem Antrieb gekoppelt. Der in Fig. 1 gezeigte Antrieb stellt die Rotorblätter 4 einer Windkraftanlage dar. Der Stator 1a ist über einen Netztransformator 5 mit den Netz verbunden. Der Rotor 1b ist elektrisch mit einem Umrichter 6 verbunden, und der Umrichter 6 ist über eine Drossel 7 und ein Netzfilter 8 mit dem Netztransformator 5 verbunden. Der Umrichter 6 umfasst einen maschinenseitigen Umrichter 6a und einen netzseitigen Umrichter 6b, die über einen Spannungszwischenkreis 6c miteinander gekoppelt sind. Der Umrichter 6 wird über eine Steuereinheit 9 angesteuert. Fig. 1 zeigt außerdem die Messstellen für Rotorstrom 9a, Statorstrom 9b und Statorspannung 9c. Die Messwerte werden an die Steuereinheit 9 übergeben. Der Steuereinheit 9 wird ebenfalls die Rotorlage vom Lagegeber 1c zur Verfügung gestellt. Zum Schutz des Umrichters 6 ist zwischen maschinenseitigem Umrichter 6a und Rotor eine Crowbar 10 angeordnet.

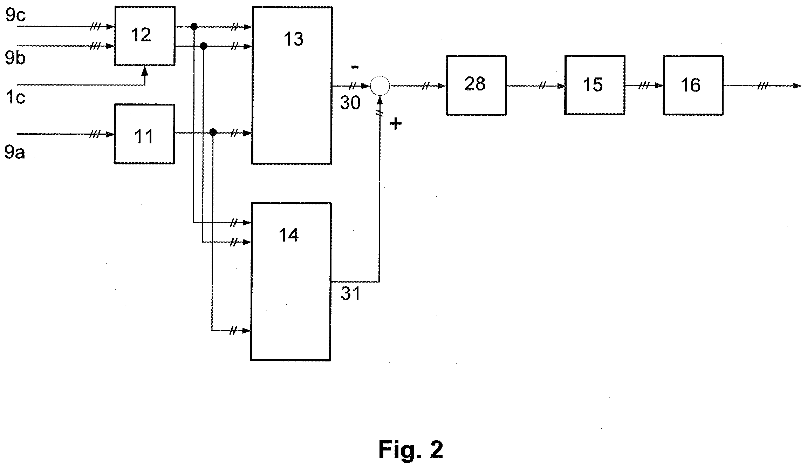

Während des normalen stationären Betriebes wird ein Standardregelverfahren verwendet. Fig. 2 zeigt eine Ausführungsform eines erfindungsgemäßen Regelverfahrens, auf welches nach Erkennen einer transienten Netzspannungsänderung umgeschaltet wird. Die für die Beobachter zur Bestimmung von Statorfluss und Rotorfluss erforderlichen Messgrößen können in verschiedenen Koordinatensystemen verarbeitet werden. Da die einzuprägende Größe bereits eine Rotorgröße ist, bietet es sich an, auch ein rotororientiertes wicklungsfestes Koordinatensystem zu wählen. Dies spart im Allgemeinen einen Rücktransformationsschritt für den Sollwert, der in den Rotor 1b eingeprägt werden soll. Der Rotorstrom 9a ist bereits eine Rotorgröße. Ein Transformationsblock 11 transformiert lediglich die Messgröße aus dem dreiphasigen System in ein zweiphasiges kartesisches Koordinatensystem. Der Statorstrom 9b und die Statorspannung 9c werden im Transformationsblock 12 zunächst vom dreiphasigen System in ein zweiphasiges, statororientiertes kartesisches Koordinatensystem transformiert, und dann mittels des Rotorlagewinkels 1c in das zweiphasige rotororientierte Koordinatensystem transformiert. Die Transformationsreihenfolge kann prinzipiell auch umgekehrt erfolgen. Die Messgrößen stehen dann zur Übergabe an den Beobachter 13 zur Bestimmung des Rotorflusses und den Beobachter 14 zur Bestimmung des Statorflusses zur Verfügung. Je nach verwendetem Modell sind nicht alle diese Größen erforderlich; insbesondere bei Verwendung des quasistationären Statorflusses ist die Kenntnis der Statorspannung ausreichend. Der quasistationäre Statorflusszeiger $\underline{\psi}_{stator}$ ergibt sich dann aus Gleichung (1):

$$\underline{\psi}_{stator} = \frac{\underline{U}_{stator}}{j\omega_{stator}} \qquad (1)$$

Dabei ist $\underline{U}_{stator}$ der Statorspannungszeiger und $\omega_{stator}$ die Statorkreisfrequenz.
Der Ausgang 30 des Beobachters 13 wird vom Ausgang 31 des Beobachters 14 subtrahiert. Das Ergebnis entspricht dem Differenzzeiger aus dem Zeiger des Rotorflusses und dem Zeiger des Statorflusses in einem zweiphasigen rotororientierten Koordinatensystem. Um aus der Flussdifferenz einen Spannungswert zu generieren, ist noch eine Multiplikation mit einem Proportionalitätsfaktor im Block 28 erforderlich. Der so ermittelte Spannungswert wird dann im Rücktransformationsblock 15 wieder auf das dreiphasige System transformiert. Im Block 16 wird aus dem dreiphasigen Rotorspannungssollwert ein Zündmuster für den Umrichter generiert. Dies kann zum Beispiel mittels einer Pulsweitenmodulation geschehen.

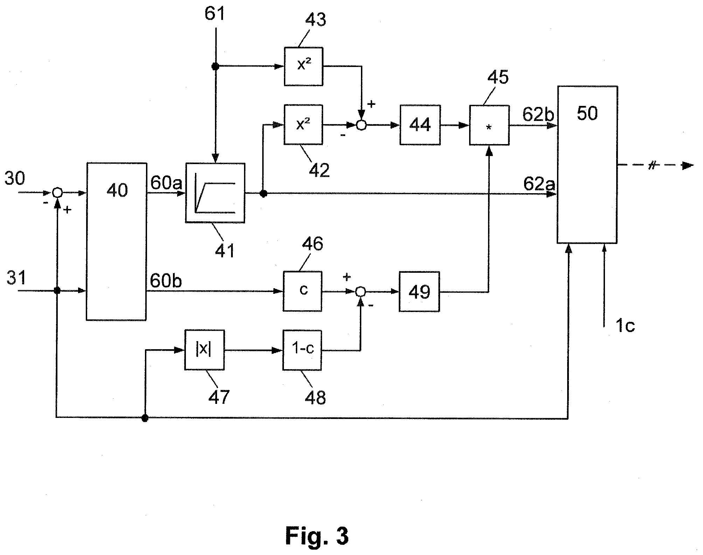

Fig. 3 zeigt eine schematische Darstellung eines Ausführungsbeispiels der Wichtung zu Gunsten einer Komponente des Differenzzeigers aus Rotorfluss und Statorfluss. In dem dargestellten Ausführungsbeispiel wird die Differenz aus Statorfluss 31 und Rotorfluss 30 einem Transformationsblock 40 zugeführt. Der Transformationsblock bestimmt eine Komponente 60a des Differenzzeigers senkrecht zum Statorfluss und eine Komponente 60b parallel zum Statorfluss. Für diese Transformation ist weiterhin der Statorfluss 31 selbst erforderlich. Anstelle der Komponente 60a des Differenzzeigers senkrecht zum Statorfluss könnte man dabei auch die Komponente des Rotorflusszeigers 30 senkrecht zum Statorfluss verwenden. Die Komponente senkrecht zum Statorfluss wird über eine Kennlinie 41 weiter verarbeitet. Eine solche Kennlinie könnte zum Beispiel eine lineare Funktion mit einer Begrenzung auf einen festgelegten Wert der Rotorspannung 61 sein. Die Kennlinie 41 generiert dann die Komponente der Rotorspannung 62a senkrecht zum Statorfluss. Die Festlegung der Rotorspannungskomponente 62b parallel zum Statorfluss erfolgt durch geometrische Subtraktion der senkrechten Rotorspannungskomponente 62a vom Rotorspannungsgrenzwert 61. Dazu werden die senkrechte Rotorspannungskomponente im Block 42 und der Rotorspannungsgrenzwert im Block 43 quadriert, die Ergebnisse voneinander subtrahiert und aus der Differenz im Block 44 die Quadratwurzel berechnet. Mittels des Blocks 45 kann dann noch mit einem Vorzeichen multipliziert werden. Am Ausgang des Blocks 45 erhält man die Komponente 62b der Rotorspannung parallel zum Statorfluss. Das Vorzeichen kann entweder derart gewählt werden, dass die Spannungskomponente 62b dazu beiträgt, den Rotorfluss dem Statorfluss anzunähern, oder derart, dass der Statorfluss reduziert wird.

Das Vorzeichen kann mittels eines Wichtungsfaktors c beeinflusst werden. Die Komponente 60b des Differenzzeigers aus Statorfluss und Rotorfluss parallel zum Statorfluss wird in Block 46 mit dem Faktor c multipliziert. Block 47 bestimmt den Betrag des Statorflusses, und Block 48 multipliziert den Betrag mit dem Faktor (1-c). Das Ergebnis wird vom Ausgang des Blocks 46 abgezogen, und im Block 49 wird das Vorzeichen bestimmt. Das Vorzeichen wird dann dem Multiplikationsblock 45 zur Verfügung gestellt. Wird der Faktor c=1 gewählt, wird nur eine Annäherung von Statorfluss und Rotorfluss unterstützt. Wird der Faktor c=0 gewählt, wird die Rotorspannungskomponente parallel zum Statorfluss nur zur Absenkung des Statorflusses benutzt. Die Rotorspannungskomponenten 60a und 60b müssen dann noch im Transformationsblock 50 in ein rotorfestes Koordinatensystem transformiert werden. Dazu werden der Statorfluss 31 und die Rotorposition 1c verwendet.

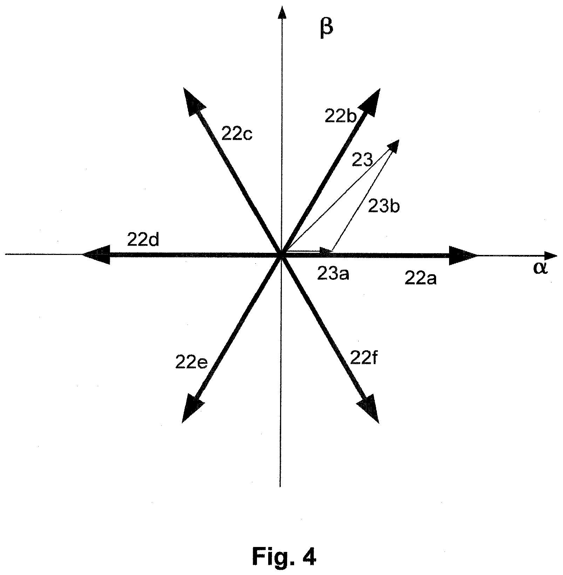

Die Dreizeigermodulation bietet eine Möglichkeit zur Umsetzung einer Pulsweitenmodulation. Eine dreiphasige Brückenschaltung kann acht diskrete Schaltzustände einnehmen. Fig. 4 zeigt eine Raumzeigerdarstellung der möglichen Schaltzustände. Sechs Schaltzustände werden durch die Zeiger 22a bis 22f repräsentiert. Zwei weitere (nicht dargestellte) Schaltzustände ergeben den Nullzeiger.

Um einen Drehzeiger u 23 zu erzeugen, wird zunächst für eine bestimmte Zeitdauer $t_1$ während der Abtastperiode $T$ der Zeiger $^1\underline{U}$ 22a geschaltet. Daraus ergibt sich im Mittel entsprechend Gleichung (2) der Drehzeiger $^1\underline{u}$ 23a:

$$^1\underline{u} = \frac{t_1}{T}\,^1\underline{U} \qquad\qquad (2)$$

Für eine darauf folgende Zeitdauer $t_2$ wird der Zeiger $^2\underline{U}$ 22b geschaltet. Daraus ergibt sich im Mittel während der Zeitdauer $t_2$ entsprechend Gleichung (3) der Zeiger $^2\underline{u}$ 23b.

$$^2\underline{u} = \frac{t_2}{T}\,^2\underline{U} \qquad\qquad (3)$$

Weiterhin wird für eine Zeit $t_0$ ein Nullvektor $u_0$ geschaltet. Während der Abtastperiode $T$ folgt daraus im Mittel der gewünschte Zeiger $\underline{u}$ 23. Die Berechnung zeigt Gleichung (4):

$$\underline{u} = {}^1\underline{u} + {}^2\underline{u} + \underline{u}_0 \qquad\qquad (4)$$

Die Summe der Einschaltzeiten der drei Vektoren ergibt die Periodendauer

$$T = \underline{t_1} + \underline{t_2} + \underline{t_0}\, . \qquad\qquad (5)$$

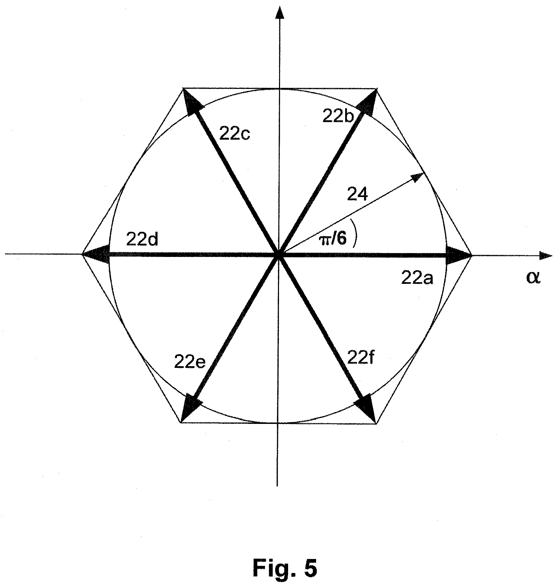

Die in Fig.5 dargestellte Kreislinie stellt die Grenze des Stellbereichs dar, der mit einer Drehzeigermodulation möglich ist. Die maximale Zeigerlänge ist durch den Drehzeiger 24 mit dem Winkel $\frac{\pi}{6}$ bestimmt. Für diesen Zeiger ist die Summe der Zeiten $t_1$ und $t_2$ maximal. Der mit dem Umrichter prinzipiell mögliche Stellbereich wird durch das in Fig. 5 dargestellte Sechseck charakterisiert. Man sieht, dass für Phasenlagen in der Nähe der diskreten Schaltzustände bei Verwendung einer Drehzeigermodulation der Stellbereich gegenüber dem mit dem Umrichter möglichen Stellbereich entsprechend eingeschränkt wird.

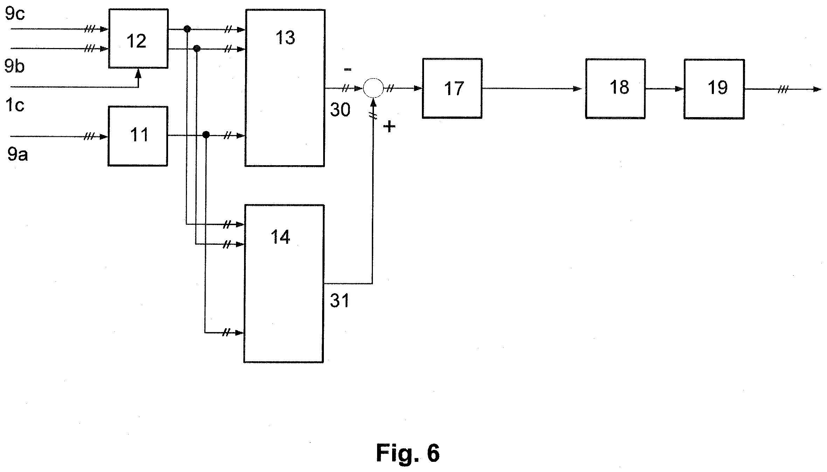

Im Falle einer transienten Netzspannungsänderung wird in der Regel eine möglichst große Rotorspannung benötigt. Deshalb ist es besonders vorteilhaft, den durch das erfindungsgemäße Verfahren oder die erfindungsgemäße Vorrichtung ermittelten Sollwert der Rotorspannung nicht mittels einer Drehzeigermodulation oder eines vergleichbaren Verfahrens zu schalten, sondern denjenigen der sechs diskreten Schaltzustände 22a bis 22f, welcher der Phasenlage des Rotorspannungssollwertes am nächsten liegt, während der gesamten Abtastperiode zu verwenden. Dadurch wird der maximal mögliche Spannungsbetrag erreicht. Eine schematische Darstellung eines solchen Verfahrens ist in Fig. 6 dargestellt. Entsprechend dem in Fig. 2 dargestellten Verfahren wird der Rotorspannungssollwert aus der Differenz der Beobachterausgänge 30 und 31 gebildet. Eine Multiplikation mit einem Proportionalitätsfaktor ist hier nicht erforderlich, da es in dieser Ausführungsform des erfindungsgemäßen Verfahrens bzw. der erfindungsgemäßen Vorrichtung nur auf den Phasenwinkel der Rotorspannung ankommt. Der Proportionalitätsfaktor wird damit auf den Wert eins festgelegt. Block 17 ermittelt aus den kartesischen Koordinaten den Phasenwinkel der Rotorspannung. Daraus ermittelt Block 18 den nächstliegenden Raumzeiger für einen der diskreten Schaltzustände, und Block 19 generiert das entsprechende Zündmuster für den rotorseitigen Umrichter.

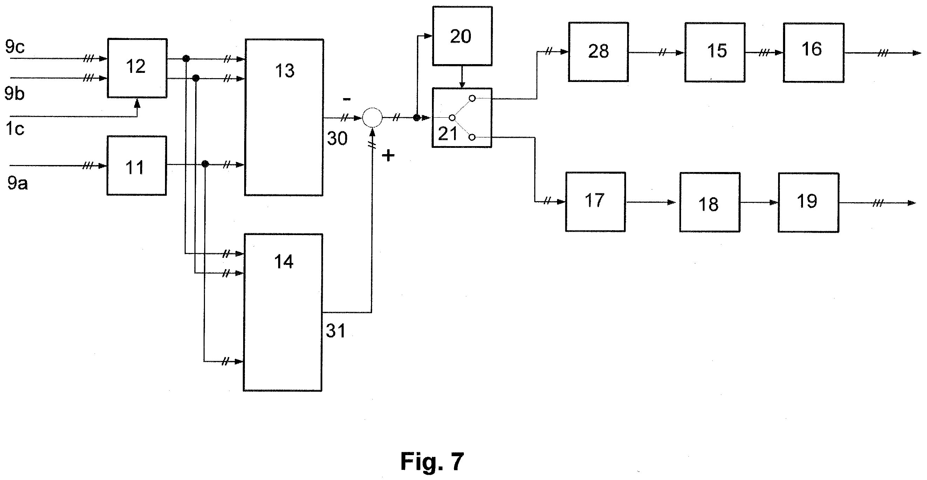

Fig. 7 zeigt die Kombination eines Verfahrens mit diskreten und kontinuierlichen Winkellagen. In den meisten Fällen wird bei transienten Netzspannungsänderungen die maximale zur Verfügung stehende Rotorspannung benötigt. Bei kleineren Spannungsänderungen ist es jedoch auch möglich, dass zur Annäherung des Rotorflusses an den Statorfluss eine kleinere Rotorspannung als die maximal mögliche ausreichend ist. In diesem Fall würde durch das Schalten nur eines diskreten Zustandes während einer Abtastperiode eine zu große Spannung generiert. Aus diesem Grunde kann durch die Schalteinrichtung 21 zwischen einem Verfahren mit Pulsweitenmodulation und einem Verfahren mit diskreten Schaltzuständen während einer Abtastperiode umgeschaltet werden. Angesteuert wird die Schalteinrichtung 21 durch die Auswerteeinrichtung 20. Diese ermittelt den Betrag des Rotorspannungssollwertes und schaltet in Abhängigkeit des Betrages zwischen den Verfahren um.

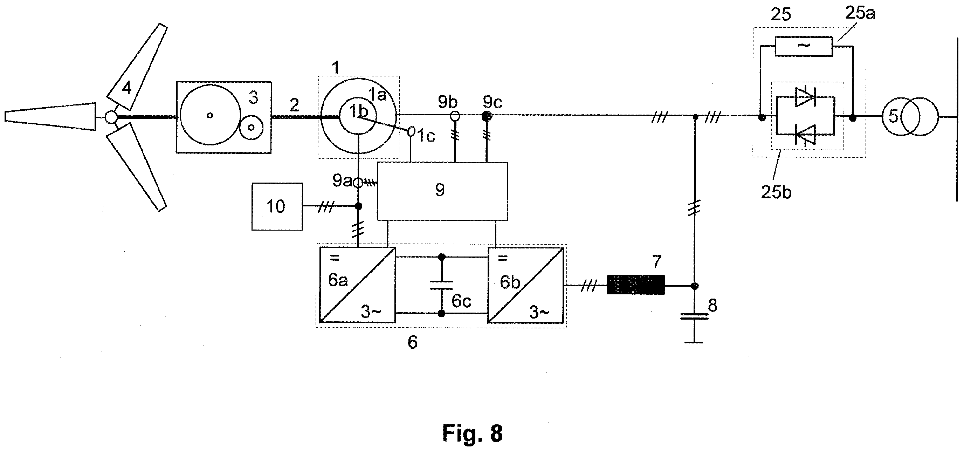

Fig. 8 zeigt eine Anordnung einer doppeltgespeisten Asynchronmaschine mit einer steuerbareren Längsimpedanz 25 im Netzpfad. Das heißt, die steuerbare Längsimpedanz ist zwischen dem Verknüpfungspunkt von Stator und netzseitigem Umrichter und dem Netz angeordnet. Die steuerbare Längsimpedanz 25 ist aus der eigentlichen Impedanz 25a und einem elektronischen Schalter 25b aufgebaut. Der elektronische Schalter besteht aus zwei antiparallelen Thyristoren pro Phase. Zum schnellen Verlöschen der Thyristoren kann zusätzlich eine (hier nicht dargestellte) Löschschaltung erforderlich sein. Werden selbstlöschende GTOs verwendet, kann auf eine Löschschaltung grundsätzlich verzichtet werden.

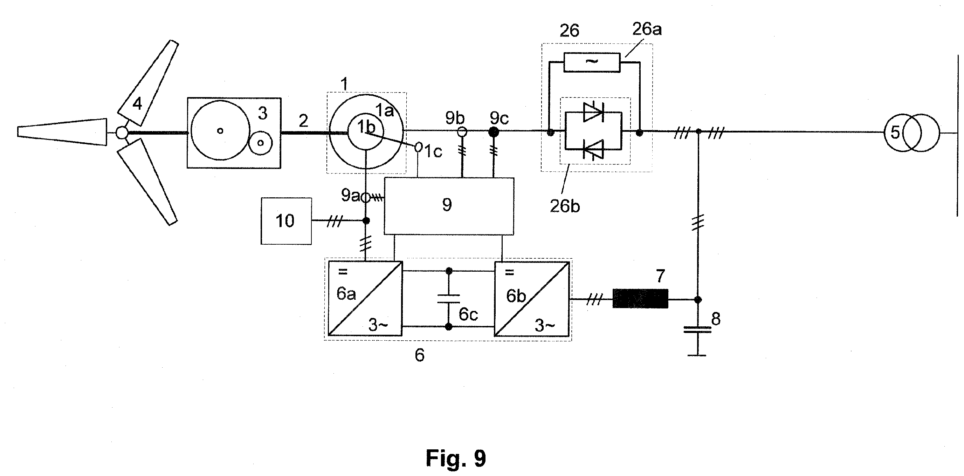

Fig. 9 zeigt eine vorteilhafte Weiterentwicklung. Hier ist die steuerbare Längsimpedanz 26 nicht im Netzpfad, sondern im Statorpfad angeschlossen, das heißt, die Impedanz ist zwischen den Statoranschlussklemmen und dem Verknüpfungspunkt von netzseitigem Umrichter und Netz angeschlossen. Der prinzipielle Aufbau der steuerbaren Längsimpedanz im Netzpfad 25 und im Statorpfad 26 ist identisch. Insbesondere der elektronische Schalter 26a, aber auch die Impedanz 26b, können jedoch für eine geringere Verlustleistung ausgelegt werden. Für den Schalter beträgt die Verringerung der Verlustleistung je nach Schlupfbereich etwa 25 % und bedeutet damit eine erhebliche Kosteneinsparung.

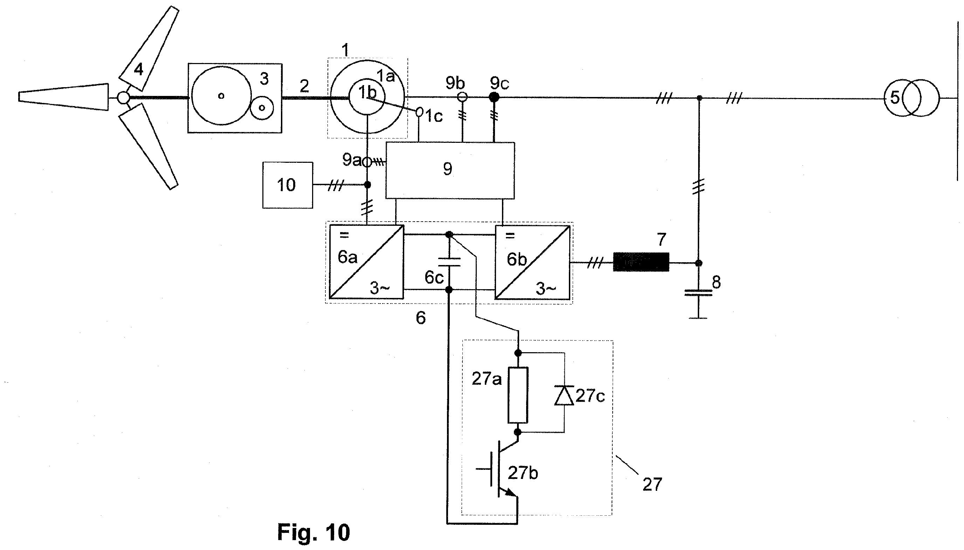

Fig. 10 zeigt eine Möglichkeit, überschüssige Energie aus dem Zwischenkreis 6c und damit mittelbar auch aus der Maschine abzuführen. Mit dem Zwischenkreis 6c ist ein Zwischenkreis-Chopper 27 verbunden. Der Zwischenkreis-Chopper 27 ist im Wesentlichen aus einem Widerstand 27a und einem elektronischen Schalter 27b aufgebaut. Im dargestellten Beispiel wird ein IGBT als Schalter verwendet. Über dem Widerstand 27a ist des Weiteren eine Freilaufdiode 27c angeordnet. Diese ist aufgrund der immer vorhandenen parasitären Induktivitäten erforderlich, um beim Ausschalten des Schalters 27b Überspannungen zu vermeiden. Der IGBT 27b wird eingeschaltet, sobald im Zwischenkreis ein zulässiger Spannungswert überschritten wird, und wieder ausgeschaltet, wenn der Wert auf einen definierten Wert abgefallen ist. Zusätzlich oder alternativ kann bei transienten Netzspannungsänderungen durch eine schnelle Regelung des netzseitigen Umrichters Leistung aus dem Zwischenkreis in das Netz abgeführt werden.

## Patentansprüche

1. Verfahren zum Betreiben einer doppeltgespeisten Asynchronmaschine (1), welche einen mit einem Netz verbundenen Stator (1a) und einen mit einem Umrichter (6) verbundenen Rotor (1b) aufweist, wobei der Umrichter (6) dahingehend ausgebildet ist, einen Sollwert einer elektrischen Größe in den Rotor (1b) einzuprägen, wobei unmittelbar nach Erkennen einer transienten Netzspannungsänderung ein wenigstens aus dem Rotorfluss und dem Statorfluss bestimmter Sollwert der elektrischen Größe in den Rotor (1b) derart eingeprägt wird, dass eine aktive Reduzierung des während der transienten Netzspannungsänderung auftretenden Drehmomentes erreicht wird, **dadurch gekennzeichnet, dass**

die elektrische Größe, die in den Rotor eingeprägt wird, die Rotorspannung ist, und dass der Sollwert des Rotorspannungszeigers bezogen auf ein zweiphasiges rotororientiertes Koordinatensystem aus mindestens einer Komponente des Differenzzeigers aus dem Zeiger des Rotorflusses und aus dem Zeiger des Statorflusses ermittelt wird.

2.  Verfahren nach Anspruch 1,
    **dadurch gekennzeichnet, dass**
    nach Erkennen einer transienten Netzspannungsänderung der wenigstens aus dem Rotorfluss und dem Statorfluss bestimmte Sollwert der elektrischen Größe in den Rotor (1b) derart eingeprägt wird, dass ferner eine aktive Reduzierung des während der transienten Netzspannungsänderung auftretenden Rotorstromes erreicht wird.

3.  Verfahren nach Anspruch 1 oder 2,
    **dadurch gekennzeichnet, dass**
    der Sollwert der elektrischen Größe aus einer geeigneten Wichtung von wenigstens einer, und vorzugsweise sämtlicher, der folgenden Größen bestimmt wird: Statorflusszeiger, Rotorflusszeiger, Statorspannungszeiger, Statorstromzeiger, Rotorstromzeiger und, sofern als Messgröße verfügbar, Rotorspannungszeiger.

4.  Verfahren nach einem der Ansprüche 1 bis 3,
    **dadurch gekennzeichnet, dass**
    der Sollwert des Rotorspannungszeigers dem Differenzzeiger aus Rotorflusszeiger und Statorflusszeiger proportional ist.

5.  Verfahren nach Anspruch einem der Ansprüche 1 bis 3,
    **dadurch gekennzeichnet, dass**
    der Sollwert der Rotorspannung einen festgelegten Wert nicht überschreitet, und dass eine Wichtung zu Gunsten der Komponente des Differenzzeigers aus Rotorflusszeiger und Statorflusszeiger, die senkrecht zum Statorflusszeiger steht, oder zu Gunsten der Komponente des Differenzzeigers aus Rotorflusszeiger und Statorflusszeiger, die parallel zum Statorflusszeiger steht, vorgenommen wird.

6.  Verfahren nach einem der Ansprüche 1 bis 5,
    **dadurch gekennzeichnet, dass**
    während einer Abtastperiode nur ein diskreter Schaltzustand des Umrichters geschaltet wird, wobei der Schaltzustand gewählt wird, dessen Phasenlage der Phasenlage des Sollwertes der Rotorspannung am nächsten liegt.

7.  Verfahren nach einem der Ansprüche 1 bis 6,
    **dadurch gekennzeichnet, dass**
    zur Bestimmung des Sollwertes der Rotorspannung eine geeignete Wichtung des transienten Rotorflusses und des quasistationären Statorflusses verwendet wird.

8.  Verfahren nach einem der Ansprüche 1 bis 7,
    **dadurch gekennzeichnet, dass**
    zur Bestimmung des Sollwertes der Rotorspannung eine geeignete Wichtung des transienten Rotorflusses und des transienten Statorflusses verwendet wird.

9.  Verfahren nach einem der vorhergehenden Ansprüche,
    **dadurch gekennzeichnet, dass**
    der Rotorfluss und der Statorfluss aus jeweils mindestens einer der gemessenen Größen Statorspannung, Statorstrom, Rotorstrom und, soweit als Messgröße verfügbar, Rotorspannung berechnet werden.

10. Vorrichtung zum Betreiben einer doppeltgespeisten Asynchronmaschine (1), insbesondere zur Durchführung eines Verfahrens nach einem der Ansprüche 1 bis 9, mit einem Stator (1a), einem Rotor (1b), einem Umrichter (6) und mindestens einer Steuereinheit (9), wobei der Stator (1a) mit einem Netz und der Rotor (1b) mit dem Umrichter (6) verbunden ist, wobei der Umrichter (6) dahingehend ausgebildet ist, einen Sollwert einer elektrischen Größe in den Rotor (1b) einzuprägen, wobei

die Steuereinheit (9) Mittel aufweist, die unmittelbar nach Erkennen einer transienten Netzspannungsänderung den wenigstens aus dem Rotorfluss und dem Statorfluss bestimmten Sollwert der elektrischen Größe derart in den Rotor (1b) einprägen, dass eine aktive Reduzierung des während der transienten Netzspannungsänderung auftretenden Drehmomentes erreicht wird,

**dadurch gekennzeichnet, dass**

die elektrische Größe, die in den Rotor eingeprägt wird, die Rotorspannung ist und dass der Sollwert des Rotorspannungszeigers bezogen auf ein zweiphasiges rotororientiertes Koordinatensystem aus mindestens einer Komponente des Differenzzeigers aus dem Zeiger des Rotorflusses und aus dem Zeiger des Statorflusses ermittelt wird.

**11.** Vorrichtung nach Anspruch 10,

**dadurch gekennzeichnet, dass**

nach Erkennen einer transienten Netzspannungsänderung der wenigstens aus dem Rotorfluss und dem Statorfluss bestimmte Sollwert der elektrischen Größe in den Rotor (1b) derart eingeprägt wird, dass ferner eine aktive Reduzierung des während der transienten Netzspannungsänderung auftretenden Rotorstromes erreicht wird.

**12.** Vorrichtung nach Anspruch 10 oder 11,

**dadurch gekennzeichnet, dass**

im Netzpfad der doppeltgespeisten Asynchronmaschine (1) eine steuerbare Längsimpedanz (25) angeordnet ist.

**13.** Vorrichtung nach Anspruch 10 oder 11,

**dadurch gekennzeichnet, dass**

im Statorpfad der doppeltgespeisten Asynchronmaschine eine steuerbare Längsimpedanz (26) angeordnet ist.

**14.** Vorrichtung nach einem der Ansprüche 10 bis 13,

**dadurch gekennzeichnet, dass**

der Umrichter einen Spannungszwischenkreis aufweist, und dass eine Schaltung (27) mit einem Widerstand (27a) zur Absenkung der Zwischenkreisspannung mit dem Spannungszwischenkreis (6c) verbunden ist.

**Claims**

**1.** A method of operating a double-fed asynchronous machine (1) which has a stator (1a) connected to a mains network and a rotor (1b) connected to an inverter (6), wherein the inverter (6) is adapted to impress a reference value of an electrical parameter on the rotor (1b), whereby

instantaneously after detection of a transient mains voltage change a reference value of the electrical parameter, that is determined at least from the rotor flux and the stator flux, is impressed on the rotor (1b) in such a way that an active reduction in the torque occurring during the transient mains voltage change is achieved,

**characterized in that**

the electrical parameter which is impressed in the rotor is the rotor voltage and that the reference value of the rotor voltage vector is determined, with regard to a two-phased rotor-oriented co-ordinate system, from at least one component of the difference vector from the vector of the rotor flux and the vector of the stator flux.

**2.** A method according to claim 1

**characterized in that**

after detection of a transient mains voltage change the reference value of the electrical parameter, that is determined at least from the rotor flux and the stator flux, is impressed on the rotor (1b) in such a way that in addition an active reduction in the rotor current occurring during the transient mains voltage change is achieved.

**3.** A method according to claim 1 or 2

**characterized in that**

the reference value of the electrical parameter is determined from suitable weighting of at least one and preferably all of the following parameters: stator flux vector, rotor flux vector, stator voltage vector, stator current vector, rotor current vector and, if available as a measurement parameter, rotor voltage vector.

**4.** A method according to one of claims 1 to 3

**characterized in that**

the reference value of the rotor voltage vector is proportional to the difference vector from the rotor flux vector and the stator flux vector.

**5.** A method according to one of claims 1 to 3

**characterized in that**

the reference value of the rotor voltage does not exceed an established value and that weighting is effected to the benefit of the component of the difference vector from the rotor flux vector and the stator flux vector which is perpendicular to the stator flux vector.

6. A method according to one of claims 1 to 5
   **characterized in that**
   during a sampling period only one discrete switching state of the inverter is switched, wherein the switching state is selected whose phase position is closest to the phase position of the reference value of the rotor voltage.

7. A method according to one of claims 1 to 6
   **characterized in that**
   to determine the reference value of the rotor voltage suitable weighting of the transient rotor flux and the quasi-steady-state stator flux is used.

8. A method according to one of claims 1 to 7
   **characterized in that**
   to determine the reference value of the rotor voltage suitable weighting of the transient rotor flux and the transient stator flux is used.

9. A method according to one of the preceding claims
   **characterized in that**
   the rotor flux and the stator flux are calculated from at least a respective one of the measured parameters of stator voltage, stator current, rotor current and, if available as a measurement parameter, rotor voltage.

10. Apparatus for operating a double-fed asynchronous machine (1), in particular for performing a method according to one of claims 1 to 9, comprising a stator (1a), a rotor (1b), an inverter (6) and at least one control unit (9), wherein the stator (1a) is connected to a mains network and the rotor (1b) is connected to the inverter (6), wherein the inverter (6) is adapted to impress a reference value of an electrical parameter in the rotor (1b), whereby the control unit (9) has means which instantaneously after detection of a transient mains voltage change impress the reference value of the electrical parameter, that is determined at least from the rotor flux and the stator flux, into the rotor (1b) in such a way that an active reduction in the torque occurring during the transient mains voltage change is achieved,
    **characterized in that**
    the electrical parameter which is impressed in the rotor is the rotor voltage and that the reference value of the rotor voltage vector is determined, with regard to a two-phased rotor-oriented co-ordinate system, from at least one component of the difference vector from the vector of the rotor flux and the vector of the stator flux.

11. Apparatus according to claim 10
    **characterized in that**
    after detection of a transient mains voltage change the reference value of the electrical parameter, that is determined at least from the rotor flux and the stator flux, is impressed on the rotor (1b) in such a way that in addition an active reduction in the rotor current occurring during the transient mains voltage change is achieved.

12. Apparatus according to claim 10 or 11
    **characterized in that**
    a controllable series impedance (25) is arranged in the network path of the double-fed asynchronous machine (1).

13. Apparatus according to claim 10 or 11
    **characterized in that**
    a controllable series impedance (26) is arranged in the stator path of the double-fed asynchronous machine.

14. Apparatus according to one of claims 10 to 13
    **characterized in that**
    the inverter has a voltage intermediate circuit and that a circuit (27) with a resistor (27a) for reducing the intermediate circuit voltage is connected to the voltage intermediate circuit (6c).

**Revendications**

1. Procédé d'actionnement d'une machine asynchrone à double alimentation (1), qui présente un stator (1a) raccordé à un réseau et un rotor (1b) raccordé à un convertisseur (6), ledit convertisseur (6) étant formé de manière à appliquer une valeur théorique d'une grandeur électrique dans le rotor (1b), une au moins valeur théorique d'une grandeur électrique dans le rotor (1b) déterminée à partir du flux rotorique et du flux statorique étant appliquée immédiatement après détection d'un changement transitoire de la tension de réseau de telle sorte qu'une réduction active du couple survenant pendant le changement transitoire de la tension de réseau est atteinte,
**caractérisé en ce que**
la grandeur électrique, qui est appliquée dans le rotor (1b), est la tension du rotor, et que la valeur théorique du voltmètre du rotor par rapport à un système de coordonnées biphasé orienté vers le rotor est établie à partir d'au moins un composant du vecteur de différences e à partir du vecteur du flux rotorique et du vecteur du flux statorique.

2. Procédé selon la revendication 1,
**caractérisé en ce que**
l'au moins valeur théorique de la grandeur électrique dans le rotor (1b) déterminée à partir du flux rotorique et du flux statorique est appliquée après détection d'un changement transitoire de la tension de réseau de telle sorte qu'une réduction active du couple survenant pendant le changement transitoire de la tension de réseau est également atteinte.

3. Procédé selon la revendication 1 ou 2,
**caractérisé en ce que**
la valeur théorique de la grandeur électrique est déterminée à partir d'une pondération adaptée d'au moins une, de préférence de l'ensemble, des grandeurs suivantes : vecteur de flux statorique, vecteur de flux rotorique, voltmètre de stator, vecteur de courant de stator, vecteur de courant de rotor et voltmètre de rotor s'il est disponible comme grandeur mesurée.

4. Procédé selon l'une des revendications 1 à 3,
**caractérisé en ce que**
la valeur théorique du voltmètre du rotor est proportionnelle au vecteur de différences à partir du vecteur du flux rotorique et du vecteur du flux statorique.

5. Procédé selon l'une des revendications 1 à 3,
**caractérisé en ce que**
la valeur théorique de la tension de rotor ne dépasse pas une valeur prescrite et **en ce qu'**une pondération, est appliquée au profit du composant du vecteur des différences à partir du vecteur du flux rotorique qui se trouve perpendiculaire au vecteur du flux statorique ou au profit du composant du vecteur des différences à partir du vecteur du flux rotorique et du flux statorique qui se trouve parallèle au vecteur du flux statorique.

6. Procédé selon l'une des revendications 1 à 5,
**caractérisé en ce que**
seul un état de commutation discret du convertisseur est commuté pendant une période d'échantillonnage, l'état de commutation dont la position de phase est la plus proche de la position de phase de la valeur théorique de la tension de rotor étant sélectionné.

7. Procédé selon l'une des revendications 1 à 6,
**caractérisé en ce que**
une pondération adaptée du flux rotorique transitoire et du flux statorique quasiment stationnaire est utilisée pour déterminer la valeur théorique de la tension de rotor.

8. Procédé selon l'une des revendications 1 à 7,
**caractérisé en ce que**
une pondération adaptée du flux rotorique transitoire et du flux statorique transitoire est utilisée pour déterminer la valeur théorique de la tension de rotor.

9. Procédé selon l'une des revendications précédentes,
caractérisé en que
le flux rotorique et le flux statorique sont calculés respectivement à partir d'au moins une des grandeurs mesurées, à savoir tension de stator, courant de stator, courant de rotor et tension de rotor si disponible comme grandeur mesurée.

10. Dispositif d'actionnement d'une machine asynchrone à double alimentation (1), en particulier pour la mise en oeuvre d'un procédé selon l'une des revendications 1 à 9, avec un stator (1a), un rotor (1b), un convertisseur (6) et au moins une unité de commande (9), le stator (1a) étant raccordé à un réseau et le rotor (1b) au convertisseur (6), le convertisseur (6) étant formé de manière à appliquer une valeur théorique d'une grandeur électrique dans le rotor (1b), l'unité de commande (9) présentant des moyens qui appliquent une valeur théorique d'une grandeur électrique dans le rotor (1b) déterminée à partir du flux rotorique et du flux statorique immédiatement après détection d'un changement transitoire de la tension de réseau de telle sorte qu'une réduction active du couple survenant pendant le changement transitoire de la tension de réseau est atteinte,
**caractérisé en ce que**
la grandeur électrique, qui est appliquée dans le rotor, est la tension du rotor, et que la valeur théorique du voltmètre du rotor par rapport à un système de coordonnées biphasé orienté vers le rotor est établie à partir d'au moins un composant du vecteur de différences à partir du vecteur du flux rotorique et du vecteur du flux statorique.

11. Dispositif selon la revendication 10,
**caractérisé en ce que**
l'au moins valeur théorique de la grandeur électrique dans le rotor (1b) déterminée à partir du flux rotorique et du flux statorique est appliquée après détection d'un changement transitoire de la tension de réseau de telle sorte qu'une réduction active du couple survenant pendant le changement transitoire de la tension de réseau est également atteinte.

12. Dispositif selon la revendication 10 ou 11,
**caractérisé en ce que**
une impédance longitudinale (25) contrôlable est disposée dans un chemin de réseau de la machine asynchrone à double alimentation (1).

13. Dispositif selon la revendication 10 ou 11,
**caractérisé en ce que**
une impédance longitudinale (26) contrôlable est disposée dans un chemin de stator de la machine asynchrone à double alimentation.

14. Dispositif selon l'une des revendications 10 à 13,
**caractérisé en ce que**
le convertisseur présente un circuit intermédiaire de tension et **en ce qu'**une commutation (27) est branchée avec une résistance (27a) au circuit intermédiaire de tension (6c) pour abaisser la tension du circuit intermédiaire.

**Fig. 1**

EP 2 130 294 B1

**Fig. 2**

EP 2 130 294 B1

Fig. 3

Fig. 4

Fig. 5

Fig. 6

**Fig. 7**

EP 2 130 294 B1

**Fig. 8**

**Fig. 9**

EP 2 130 294 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004030199 A
- WO 2006030183 A
- US 20050116476 A1
- US 20060238929 A1
- US 2007052244 A1

**In der Beschreibung aufgeführte Nicht-Patentliteratur**

- **A. CAUSEBROOK ; D.J. ATKINSON ; A.G. JACK.** Fault Ride-Through: Shifting the Balance of Power from Blade Pitch to Electrical Resistance. EWEC, 27. Februar 2006
- **JORUN I. MARVIK ; TORSTEIN BJØRGUM ; BJARNE I. NAESS ; TORE M. UNDELAND ; TERJE GJENGEDAL.** Control of a Wind Turbine with a Doubly Fed Induction Generator after Transient Failures. NORPIE, 14. Juni 2004
- Ride-Through Analysis of Doubly Fed Induction Wind- Power Generator Under Unsymmetrical Network Disturbance. **SEMAN et al.** IEEE TRANSACTIONS ON POWER SYSTEMS. IEEE SERVICE CENTER, 01. November 2006, vol. 21, 1782-1789
- **XIANG D et al.** Control of a doubly fed induction generator in a wind turbine during grid fault ride-through. *IEEE TRANSACTIONS ON ENERGY CONVERSION,* September 2006, vol. 21 (3), 652-662
- Dynamic modelling and robust current control of wind-turbine driven DFIG during external AC voltage dip. **JIA-BING HU et al.** JOURNAL OF ZHEJIANG UNIVERSITY SCIENCE A; AN INTERNATIONAL APPLIED PHYSICS & ENGINEERING JOURNAL. SPRINGER, 01. Oktober 2006, vol. 7, 1757-1764